# EUROPEAN PATENT APPLICATION

(11) **EP 2 353 763 A1**
(43) Date of publication of application: **10.08.2011**
(21) Application number: 10001366.3
(22) Date of filing: 10.02.2010
(51) Int. Cl.: B23K 1/00, B23K 1/008, B23K 1/19, F01D 5/18

(54) **A method of manufacturing a hot-gas component with a cooling channel by brazing a sintered sheet on a carrier ;corresponding hot-gas component**

(71) Applicant: SIEMENS AKTIENGESELLSCHAFT, 80333 München (DE)
(72) Inventor: Ott, Michael, Dr., 45470 Mülheim an der Ruhr (DE); Reinkensmeier, Ingo, 58730 Fröndenberg (DE)

(57) **Abstract**

The invention relates to a method of manufacturing a hot-gas component (20) with cooling channels (25) and a hot gas component (20) manufactured by the said method. Pre-sintered preform materials are used for the manufacturing of a hot-gas component (20) with a cooling channel (25). The method initially involves providing a carrier substrate (22) for the hot-gas component (20) and then providing a sheet (24) of pre-sintered preform material. The sheet (24) is then arranged on the carrier substrate (22) so as to form the cooling channel (25). The sheet (24) and the carrier substrate (22) are then brazed to manufacture the hot-gas component (20) with the cooling channel (25).

## Description

The present invention relates to the manufacturing of hot-gas components, particularly manufacturing of hot-gas components with cooling channels.

In the modern stationary gas turbines for the creation of energy, the focus is on ever greater efficiencies. The increase in efficiency is based on manufacturing processes that are becoming increasingly more cost effective and use resources more sparingly. Owing to the high operational temperatures of hot gas components, these components are preferably fitted with cooling systems to reduce the temperature of the components in the critical areas. These often involve areas deep within the systems that are difficult to access. These cooling systems pose immense technical challenges and are relatively cost intensive to create.

Normally, cooling systems are drilled or milled laboriously, eroded or integrated with the component by casting. For example, in a
a transition duct manufacturing in gas turbines, the cooling channels are milled laboriously into the thin sheets and joined in an extremely tedious bonding process.

It is an object of the present invention to provide a simple method of manufacturing a hot-gas component with cooling channels.

The said object is achieved by providing a method of manufacturing a hot-gas component with a cooling channel according to claim 1 and by a hot-gas component with a cooling channel manufactured by said method according to claim 10.

The underlying idea is to use pre-sintered preform material for the manufacturing of a hot-gas component with a cooling channel. The method initially involves providing a carrier substrate for the hot-gas component and then providing a sheet of pre-sintered preform material. The sheet is then arranged on the carrier substrate so as to form the cooling channel. The sheet and the carrier substrate is then brazed to manufacture the hot-gas component with the cooling channel. The carrier substrate is the base material for the manufacturing of the hot-gas component. It can be of a single material or an alloy which could be operated at very high temperatures i.e greater than 1000 degrees, for example in gas turbine applications.

The method of using an independent carrier substrate and an independent sheet of pre-sintered preform material provides the freedom to come up with multitude of possibilities to make a cooling channel rather than by a solid piece of material. This also helps the workman to work with the individual independent pieces if required, with ease and precision, before the components are arranged and brazed to form a cooling channel of a hot gas component. Arranging the pre-sintered preform material and the carrier substrate so as to form a cooling channel just simplifies the whole manufacturing process by avoiding tedious and labor intensive work of boring or drilling into a solid sheet of material or casting of these cooling channels.

In a preferred embodiment, the carrier substrate further has a surface structure such that, a cooling channel is formed by covering the surface structure with the pre-sintered preform sheet. It is possible to have a surface structure for the carrier substrate, which could be provided manually by some process like grinding. Covering the surface structure with the pre-sintered preform sheet enables to provide the cooling channel by its mere arrangement.

In a further preferred embodiment, the pre-sintered preform sheet has a profile so as to form a cooling channel when said sheet is arranged on the carrier substrate. The profile could be a preformed profile, manufactured for a specific use, like for a cooling channel of any hot gas component. This again simplifies the whole process.

In an alternative embodiment, the sheet of pre-sintered preform provided further comprises multiple layers of pre-sintered preform sheets. This enables multitude of possibilities of having cooling channels by different arrangements of the layers of pre-sintered preform sheets along with the carrier substrate.

In an alternative embodiment, the cooling channel is formed by the overlapping of a plurality of pre-sintered preform sheets on the carrier substrate. This enables another way of making the cooling channel of the hot gas component by typical overlapping arrangements of the pre-sintered preform sheets.

In another alternative embodiment, the carrier substrate further has a form substantially similar to that of hot-gas component. The same process of manufacturing the hot-gas component could be extended to the repair of faulty hot gas components, in which case the carrier substrate could almost resemble to the shape of the hot-gas component.

In another alternative embodiment, the carrier substrate is of a pre-sintered preform material. Even the carrier substrate made of pre-sintered preform material enables the possibility of making customized shapes with ease and could result in stronger joints when brazed. This enables to work on hot components made exclusively of pre-sintered preform materials.

In another alternative embodiment, arranging the sheet on the carrier substrate includes initially fixing the arrangement by welding the sheet to the carrier substrate. This is meant only to retain the shape till the actual joining process i.e brazing is done, so as to get the required shape on performing the final brazing.

In another alternative embodiment, the brazing is a high temperature vacuum brazing. The result is a high quality joint in the zone between the carrier substrate and the pre-sintered preform material. This also results in a high cleanliness brazed joint and the said process can be effectively controlled.

The present invention is further described hereinafter with reference to illustrated embodiments shown in the accompanying drawings, in which:
FIG 1 illustrates a hot-gas component, a transition duct used in gas turbine in the prior art,
FIG 2 illustrates a portion of a hot-gas component manufactured according to an embodiment of the invention where the carrier substrate has a specific surface structure,
FIG 3 illustrates a portion of a hot-gas component manufactured according to an embodiment of the invention, where the pre-sintered preform materials are arranged on top of the carrier substrate so as to form a cooling channel in the hot-gas component,
FIG 4 illustrates a portion of a hot-gas component manufactured according to an embodiment of the invention, where the cooling channel is formed by overlapping of a plurality of pre-sintered preform sheets on the carrier substrate,
FIG 5 illustrates a portion of a hot-gas component manufactured according to an embodiment of the invention, where the cooling channel is formed exclusively by plurality of pre-sintered preform material, and
FIG 6 illustrates a hot-gas component; a transition duct used in gas turbine manufactured using the method according to the present invention.

The practical application of the invention can be found in the manufacture and repair of hot-gas components in a gas turbine or other high temperature applications. For example, the hot gas-component can be a gas turbine transition duct or a turbine blade. The hot gases are transferred from the combustor to the turbine by a transition duct. Due to the position of the combustors relative to the turbine inlet,for example in a can annular gas turbine engine the transition duct must change cross-sectional shape from a generally cylindrical shape at the combustor exit to a generally rectangular arc-like shape at the turbine inlet. In addition, the transition duct undergoes a change in radial position, since the combustors are typically mounted outboard of the turbine. To withstand the hot temperatures from the combustor gases, transition ducts are typically air-cooled with the help of internal cooling channels. These often involve working on areas by a laborer in areas deep within the systems that are difficult to access. The definition of hot-gas component referred in the invention is also considered to include a specific portion or a part of a hot-gas component.

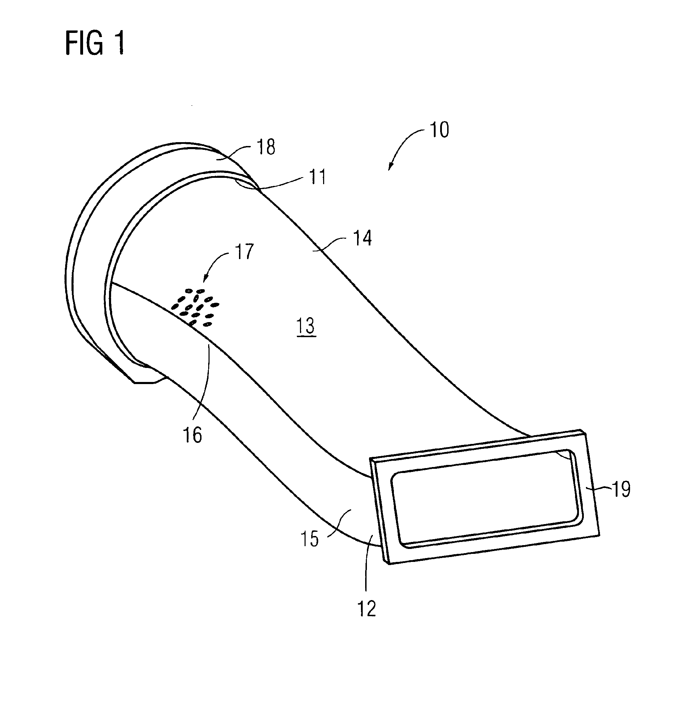

FIG 1 illustrates a hot-gas component of a prior art, a transition used in gas turbine. A transition duct 10 includes a panel assembly 13 having an inlet end 11 of generally circular cross section and an outlet end 12 having a generally rectangular arc-like cross section. The panel assembly 13 comprises a first panel 14 and a second panel 15 joined together along a plurality of axial seams 16 by a means such as welding. The panel assembly 13 also contains a plurality of cooling holes 17 extending throughout the first panel 14 and the second panel 15 to provide cooling air to the panels. The transition duct 10 further comprises an inlet ring 18 fixed to the inlet end 11 and a frame 19 fixed to the outlet end 12. The panel assembly 13 of the transition duct 10 is preferably manufactured from a high temperature nickel base alloy. In this type of a complex structure extreme care must be taken to avoid geometric changes while providing cooling channels.

The basic idea behind the present invention is to use the so called pre-sintered preform materials (PSP's). These are pre-sintered mixtures of braze and base material which can be used like conventional sheet material. To produce the corresponding cooling channels, PSP elements are pre-sintered in the required thicknesses and desired dimensions and are then applied to the carrier substrate in a subsequent vacuum brazing process.

The compositions of the PSP elements are selected in such a way that the cooling channels are aligned precisely, without merging completely into each other. With the help of this invention variety of shapes of the cooling channels can be realized. For high temperature applications, like hot gas components the composition of base material or the base alloy could vary from 80%-40% and the braze in the PSP, could vary from 20%-60%. Preferably the ratio between the base material to the braze is 60:40. But this ratio can vary based on the requirement.

With turbine temperatures reaching up to 1300°C and the presence of hot corrosive gases, components experience considerable erosion and wear. The pre-sintered preforms consist of a blend of a base material and low melting point braze and are customized to fit the shape of the component and then tack-welded into place and brazed.

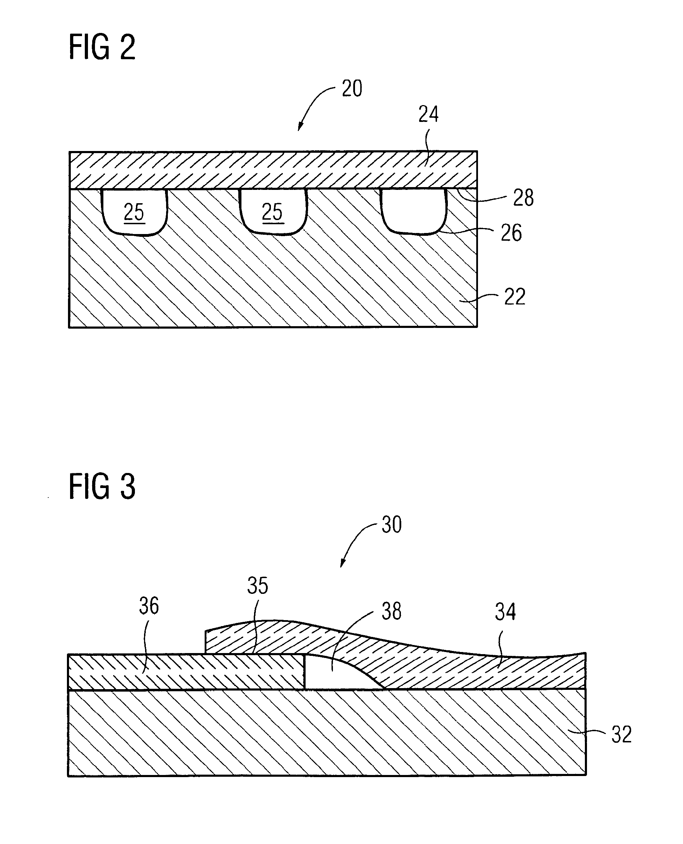

FIG 2 illustrates a portion 20 of a hot-gas component manufactured according to an embodiment of the invention where the carrier substrate 22 has a surface structure 26. The surface structure 26 can be of any required shape and is grinded or drilled on the carrier substrate 22 or could be preformed prior to the manufacturing of the hot-gas component. A pre-sintered preform sheet 24 is placed or arranged above the carrier substrate 22 so as to form plurality of cooling channels 25 along the length of the sheet 24. Here the cooling channel 25 is formed by covering the surface structure 22 with the pre-sintered preform sheet 24. Then the pre-sintered preform sheet 24 is temporarely welded, for example using spot welding to the carrier substrate 22 to create a joint 28, so as to keep it in proper position prior to performing the brazing. Brazing is then performed, which is a high temperature vacuum brazing even though any other type of brazing method could be used.

Vacuum brazing is a material joining technique that offers significant advantages. It results in extremely clean, superior; flux-free braze joints of high integrity and strength. The process is performed inside a vacuum chamber vessel. Temperature uniformity is maintained on the work piece when heating in a vacuum, greatly reducing residual stresses due to slow heating and cooling cycles. This, in turn, can significantly improve the thermal and mechanical properties of the material, thus providing unique heat treatment capabilities. Since vacuum brazing is often conducted in a furnace; this means that several joints can be made at once because the whole workpiece reaches the brazing temperature. During brazing, the braze which has a lower melting point than the base material melts and forms a solid joint 28 between the pre-sintered perform sheet 24 and the carrier substrate 22.

FIG 3 illustrates a portion 30 of a hot-gas component manufactured according to an embodiment of the invention, where the pre-sintered preform materials 34 and 36 are arranged on top of the carrier substrate 32. The cooling channel 38 in the said embodiment is formed by the overlap 35 between the first pre-sintered preform sheet 34 and the second pre-sintered preform sheet 36 in combination with the arrangement of the carrier substrate 32 as shown in FIG 3. It is to be noted that the first pre-sintered perform sheet 34 has a specific profile, which enables it to form a cooling channel 38, when placed above the carrier substrate 32 and arranged in combination with the second pre-sintered preform sheet 36. As discussed earlier said arrangement is then temporarily spot welded and then subjected to vacuum brazing to get a solid cooling channel in place.

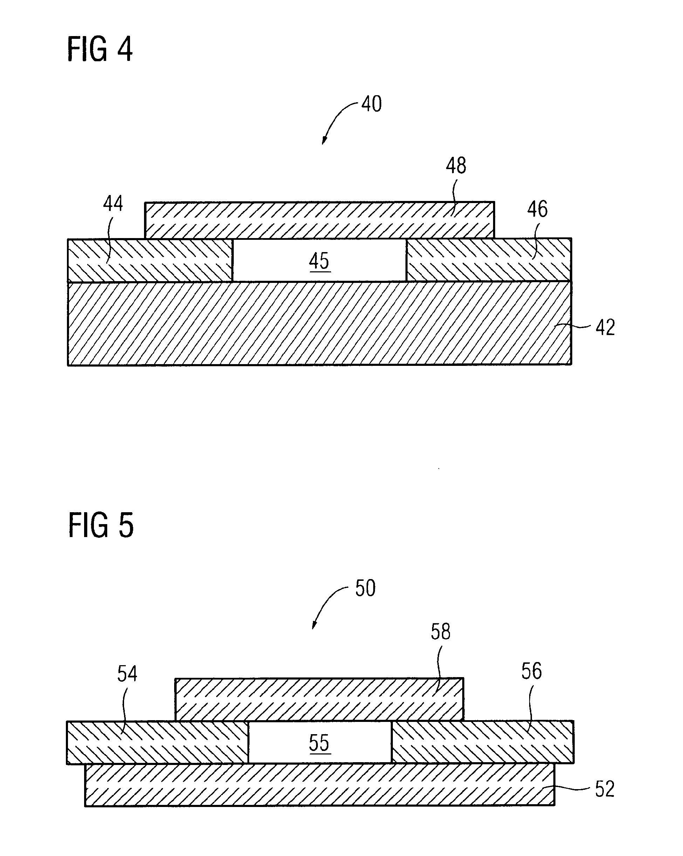

FIG 4 illustrates a portion 40 of a hot-gas component manufactured according to an embodiment of the invention, where the cooling channel 45 is formed by the overlapping of a plurality of pre-sintered preform sheets 44, 46 and 48 arranged as shown in the FIG 4, along with the carrier substrate 42. In the said embodiment the first pre-sintered preform sheet 44 and the second pre-sintered preform sheet 46 is arranged on top of the carrier substrate 42 as shown in FIG 4. A third pre-sintered preform sheet 48 is placed on top of the first and the second pre-sintered preform sheets so as to overlap the said PSP sheets as shown in FIG 4 to form a cooling channel 45. Then the arrangement is temporarily welded and then subjected to vacuum brazing to get a solid cooling channel. PSP material described in the invention can have different customary shapes based on the requirement and not necessarily restricted to sheets alone.

FIG 5 illustrates a portion 50 of a hot-gas component manufactured according to an embodiment of the invention, where the cooling channel 55 is formed by plurality of pre-sintered preform sheets 52, 54, 56 and 58. It is also possible to construct a cooling channel exclusively from pre-sintered preform sheets. As shown in the FIG 5, the carrier substrate itself is a pre-sintered preform sheet 52, on which the pre-sintered preform sheet 54, 56 and 58 are arranged to form a cooling channel 55. Then the arrangement is temporarily welded and then subjected to vacuum brazing to get a solid cooling channel.

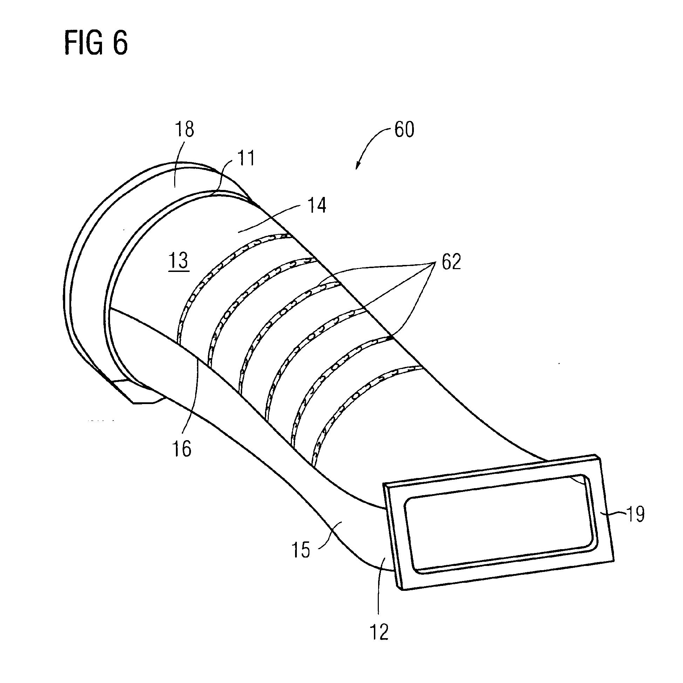

FIG 6 illustrates a hot-gas component 60, which is a transition duct used in gas turbine manufactured according to the invention. The overall assembling of the transition duct remains the same as described in FIG 1, but the first panel 14 and a second panel 15 of FIG 1 is now made of plurality of cooling channels 62 manufactured according to the method of the present invention.

Summarizing, the present invention introduces a method of manufacturing a hot-gas component with a cooling channel and a hot-gas component manufactured by the said method. Pre-sintered preform (PSP) materials/elements make it possible to cut out any desired forms and dimension based on the requirement. Similarly, it is possible to realize almost any desired form through the combination of various PSP elements/materials. The elements are cut in a simple form, arranged and joined tentatively by spot welding to form cooling channels. Welding or any other simple bonding is meant only to retain the shape till the actual joining process i.e. brazing is done. Similarly, it is possible to get preforms that are already close to the desired shape enabling easy formation of the PSP cooling channels.
Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A method of manufacturing a hot-gas component (60, 20) with a cooling channel (62, 25), comprising:
- providing a carrier substrate (22) for the hot-gas component (60),
- providing a sheet (24) of pre-sintered preform material,
- arranging the sheet (24) on the carrier substrate (22) so as to form the cooling channel (62, 25); and
- brazing the sheet (24) to the carrier substrate (22) to manufacture the hot-gas component (60, 20) with the cooling channel (62, 25).

2. The method according to claim 1,
wherein the carrier substrate (22) further has a surface structure (26) such that, a cooling channel (25) is formed by covering the surface structure (26) with the pre-sintered preform sheet (24).

3. The method according to claim 1 or 2,
wherein the pre-sintered perform sheet (34) has a profile so as to form a cooling channel (38) when said sheet (34) is arranged on the carrier substrate (32).

4. The method according to any of the claims 1 to 3,
wherein the sheet of pre-sintered preform provided further comprises multiple layers of pre-sintered preform sheets.

5. The method according to any of the claims 1 to 4, further comprise the step of forming the cooling channel (38) by the overlapping of a plurality of pre-sintered preform sheets (34, 36) on the carrier substrate (32).

6. The method according to any of the claims 1 to 5,
wherein the carrier substrate (22, 32, 42) further has a form substantially similar to that of hot-gas component (60, 20).

7. The method according to any of the claims 1 to 6,
wherein the carrier substrate (52) is of a pre-sintered preform material.

8. The method according to any of the claims 1 to 7,
wherein arranging the sheet (44, 46, 48) on the carrier substrate (42) includes initially fixing the arrangement by welding the sheet to the carrier substrate.

9. The method according to any of the claims 1 to 8,
wherein the brazing is a high temperature vacuum brazing.

10. A hot-gas component (60, 20) with a cooling channel (62, 25), comprising:
- a carrier substrate (22), and
- a sheet (24) of pre-sintered preform material arranged on the carrier substrate (22) to form the cooling channel (62, 25), said sheet (24) brazed to the carrier substrate (22) to form the hot-gas component (60, 20) with the cooling channel (62, 25).

11. The hot-gas component according to claim 10,
wherein the carrier substrate (22) further has a surface structure (26) such that, a cooling channel (25) is formed by covering the surface structure (26) with the pre-sintered preform sheet (24).

12. The hot-gas component according to claim 10 or 11,
wherein the pre-sintered preform sheet (34) has a profile so as to form a cooling channel (38) when said sheet (34) is arranged on the carrier substrate (32).

13. The hot-gas component according to any of the claims 10 to 12,
wherein sheet of pre-sintered preform provided further comprises multiple layers of pre-sintered preform sheets.

14. The hot-gas component according to any of the claims 10 to 13,
further comprise forming the cooling channel (38) by the overlapping of a plurality of pre-sintered preform sheets (34, 36) on the carrier substrate (32).

15. The hot-gas component according to any of the claims 10 to 14,
wherein the carrier substrate (22, 32, 42) further has a form substantially similar to that of the hot-gas component.

16. The hot-gas component according to any of the claims 10 to 15,
wherein the carrier substrate (52) is of the pre-sintered preform material.

17. The hot-gas component according to any of the claims 10 to 16,
wherein arranging the sheet (44, 46, 48) on the carrier substrate (42) includes initially fixing the arrangement by welding the sheet to the carrier substrate.

18. The hot-gas component according to any of the claims 10 to 17,
wherein the brazing is a high temperature vacuum brazing.
